# EUROPEAN PATENT APPLICATION

(11) **EP 4 475 154 A1**
(43) Date of publication of application: **11.12.2024**
(21) Application number: 23770351.7
(22) Date of filing: 27.02.2023
(51) Int. Cl.: H01G 9/035, H01G 9/028, H01G 9/10, H01G 9/145, H01G 9/15

(54) **ELECTROLYTIC CAPACITOR**

(30) Priority: 17.03.2022 JP 2022042972
(71) Applicant: Nippon Chemi-Con Corporation, Tokyo 141-8605 (JP)
(72) Inventor: SATO, Kenta, Tokyo 141-8605 (JP); NAKAMURA, Ippei, Tokyo 141-8605 (JP)
(74) Representative: AWA Sweden AB
(86) International application number: PCT/JP2023/006980
(87) International publication number: WO 2023/176392

(57) **Abstract**

An electrolytic capacitor in which transpiration of electrolytic solution is suppressed while suppressing deformation of a sealing body even under the high-temperature environment is provided. The electrolytic capacitor includes a capacitor element including anode foil, cathode foil, electrolytic solution, and a solid electrolyte layer, a casing housing the capacitor element, and a sealing member sealing the casing. The sealing body contains butyl rubber. The electrolytic solution contains a solvent and an antioxidant. The solvent contains glycerin, diglycerin, or both. The antioxidant is water-soluble and has a benzene ring and two or more hydroxyl groups in a molecular structure.

## Description

### FIELD OF INVENTION

The present disclosure relates to an electrolytic capacitor that gains capacitance by dielectric polarization of dielectric oxide film, and stores and discharges electric charge.

### BACKGROUND

In electrolytic capacitors utilizing valve action metal such as tantalum and aluminum, by making the valve action metal as an anode-side counter electrode into shapes of a sintered body or etching foil, and the like to enlarge a surface of a dielectric, the electrolytic capacitors can be in a small size and have a large capacity. In this type of the electrolytic capacitor, voids are filled with electrolytic solution to adhere dielectric oxide film of the anode to the counter electrode.

The electrolytic solution directly contacts with the dielectric oxide film and acts as a true cathode, and also repairs the dielectric oxide film. However, evaporation and volatilization occurs, in which the electrolytic solution is released outside the electrolytic capacitor over time. Therefore, the capacitance of the electrolytic capacitor decreases over time toward dry-up, and finally ends its life.

A capacitor element is housed in an outer casing with bottom, and an opening of the outer casing is sealed by a sealing body. This sealing body adheres to the opening of the casing by a press-fitting process and is formed by an elastic member of appropriate hardness to improve sealing performance. For example, the sealing body includes an elastomer such as butyl rubber. The elastomer is produced by vulcanization to cause cross-linking reaction.

However, the electrolytic solution is not completely confined in the casing, but gradually permeates through the sealing body and gradually volatilizes to the outside of the electrolytic capacitor. Therefore, it is suggested to use a solvent with high boiling point for the electrolytic solution (for example, refer Patent Document 1). The solvent with high boiling point may be γ-butyrolactone with boiling point of 203 °C, butanediol with boiling point of 230 °C, sulfolane with boiling point of 285 °C, ethylene glycol with boiling point of 198 °C, and polyethylene glycol with boiling point of 244 °C, etc.

In recent years, excellent performance under high-temperature environment of for example 170 °C is required for the electrolytic capacitor for in-vehicle application. In detail, long lifetime is required for the electrolytic capacitor to maintain a certain level of the capacitance for a long time even under the high-temperature environment.

When the electrolytic capacitor is exposed under the high-temperature environment, the sealing body easily thermally oxidatively deteriorates, the permeability of the sealing body is increased, and the sealing body likely cracks. Therefore, even if the electrolytic solution is formed by the solvent with boiling point higher than 170 °C, when the electrolytic capacitor is exposed under the high-temperature environment, the transpiration of the electrolytic solution cannot be suppressed and the electrolytic capacitor may easily dries-up.

That is, the C-H bond of the elastomer molecule cleaves, and radicals are produced. Firstly, the radical attacks other C-H bonds of the elastomer molecule and facilitates further cleavage. Secondly, oxygen is added to the radical, and peroxides are produced. The peroxide is degraded by heat and produces radicals at an accelerated rate, and this radical attacks other C-H bonds of the elastomer molecules and facilitate further cleavage.

When this is repeated, the length of the chain of the elastomer molecule becomes shorter, and the elastomer member becomes softer. The elastomer with low molecular weight easily vaporizes. Furthermore, when the elastomer with short chain recombines, the density of the elastomer increases. Therefore, the elastomer member shrinks. Therefore, the electrolytic solution can easily permeate through the sealing body. Furthermore, the shrink varies in each portion of the sealing body, and the sealing body may crack due to the difference in the shrinking.

To suppress the thermal oxidative deterioration of the sealing body, it is proposed to mix an antioxidant in the sealing body of the electrolytic capacitor. However, the antioxidant is consumed as it fulfills its anti-oxidation action and will gradually be lost, and this gives a limit to the lifetime of the electrolytic capacitor. Furthermore, if the antioxidant added to the sealing body is increased, the performance of the sealing body becomes worse, and finally, the performance of the electrolytic capacitor becomes worse. Therefore, it has been proposed to use a lipophilic solvent as the solvent of the electrolytic solution and use a fat-soluble compound which dissolves in the lipophilic solvent as the antioxidant (for example, refer Patent Document 1). For example, the fat-soluble antioxidant may be tocopherol.

According to this proposal, the lipophilic solvent facilitates the fat-soluble antioxidant to penetrate into the sealing body. When the antioxidant penetrates into the sealing body, since less oxygen and moisture permeate through the sealing body, the antioxidant in the electrolytic solution is maintained in the capacitor element in a state with less deterioration, such as oxidation, for a long time. Furthermore, even if the sealing body thermally oxidatively deteriorates, since the antioxidant enters into gaps between molecules of the sealing body, the sealing body is less likely to shrink, thereby suppressing cracks.

### PRIOR ART DOCUMENT

### PATENT DOCUMENT

Patent Document 1: WO2013/094462 A1
Patent Document 2: WO2021/171611 A1

### SUMMARY OF INVENTION

### PROBLEMS TO BE SOLVED BY INVENTION

When the electrolytic capacitor containing the solvent and the fat-soluble antioxidant is exposed under the high-temperature environment of 170 °C, it is observed that the sealing body has deformed as if it had molten once and then re-solidified. To observe this, glycerin is used as the solvent and tocopherol was used as the fat-soluble antioxidant.

The present disclosure has been proposed to solve the above problems, and an objective is to provide an electrolytic capacitor that suppresses the deformation of sealing body and suppresses the transpiration of the electrolytic solution even under the high-temperature environment.

### MEANS TO SOLVE THE PROBLEM

The inventors have well studied and found that when the sealing body contains butyl rubber and the electrolytic solution contains glycerin or diglycerin, particular antioxidants have high oxidative deterioration suppression effect. Also, this particular antioxidant is water-soluble. This particular antioxidant (hereinafter also referred to as the present particular antioxidant) is water-soluble and has a benzene ring and two or more hydroxyl groups in the molecular structure.

Based on such discoveries, to address the above problems, an electrolytic capacitor of the present embodiment includes: a capacitor element comprising anode foil, cathode foil, electrolytic solution, and a solid electrolyte layer; a casing housing the capacitor element therein; a sealing body sealing the casing; and an antioxidant, in which the sealing body contains butyl rubber, and the electrolytic solution contains glycerin, diglycerin, or both as a solvent, and the antioxidant is water-soluble and has a benzene ring and two or more hydroxyl groups in a molecular structure.

By this, even when the electrolytic capacitor is exposed under the high-temperature environment of 170 °C, the transpiration of the electrolytic solution is suppressed without deforming the sealing body, and the lifetime of the electrolytic capacitor is extended.

The antioxidant may be contained in the electrolytic solution. The antioxidant may be attached to the capacitor element separately from the electrolytic solution or may be added to the casing after impregnation of the electrolytic solution.

The antioxidant may be hydroquinone, catechol, 2-methylhydroquinone, 2-acetylhydroquinone, 4,4'-thiobis(3-methyl-6-tert-butylphenol), 1,4-dihydroxynaphthalene, 2-phenylhydroquinone, 1,2,4-trihydroxybenzene, or 1,4-dihydroxy-2-methoxybenzene.

The glycerin, diglycerin, or both may be contained in an amount of 20 wt% relative to a total of the solvent. By this, an excellent environment for the present particular antioxidant to express the oxidative deterioration suppression effect is achieved, and the transpiration of the electrolytic solution is suppressed without deforming the sealing body, extending the lifetime of the electrolytic capacitor.

The antioxidant may be contained in an amount of 1.5 wt% relative to a total of the electrolytic solution. By this, the excellent oxidative deterioration suppression effect of the present particular antioxidant is expressed, and the transpiration of the electrolytic solution is easily suppressed without deforming the sealing body, easily extending the lifetime of the electrolytic capacitor.

The glycerin, diglycerin, or both may be contained in an amount of 40 wt% relative to a total of the solvent, and the antioxidant may be contained in an amount of 3 wt% relative to a total of the electrolytic solution. By this, a further excellent environment for the present particular antioxidant to express the oxidative deterioration suppression effect is achieved, and the transpiration of the electrolytic solution is suppressed without deforming the sealing body, further extending the lifetime of the electrolytic capacitor.

The electrolytic solution may further contain ethylene glycol. When ethylene glycol are used as the solvent of the electrolytic solution in addition to glycerin and diglycerin, the electrolytic solution expresses the electrolytic solution transpiration suppression effect of the same level as when γ-butyrolactone or sulfolane is used as the solvent of the electrolytic solution by glycerin or diglycerin of low level, and the transpiration suppression effect of the electrolytic solution can be improved and the concentration of glycerin or diglycerin can be lowered.

Even if material other than butyl rubber is contained in the sealing body, the transpiration of the electrolytic solution can be easily suppressed without deforming the sealing body. For example, the sealing body further contains ethylene propylene rubber, and the butyl rubber and the ethylene propylene rubber are cross-linked by resin vulcanization.

Note that the capacitor element may include a solid electrolyte layer to reduce the resistance component of the electrolytic capacitor even though glycerin and diglycerin has high viscosity and specific resistance.

The solid electrolyte layer may contain a liquid compound with a boiling point of 150 °C or more and a hydroxyl group. The liquid compound may be ethylene glycol.

### EFFECT OF INVENTION

According to the present disclosure, the transpiration of the electrolytic solution is suppressed under high-temperature environment of 170 °C while suppressing the deformation of the sealing body, and the long lifetime of the electrolytic capacitor is achieved.

### BRIEF DESCRIPTION OF DRAWINGS

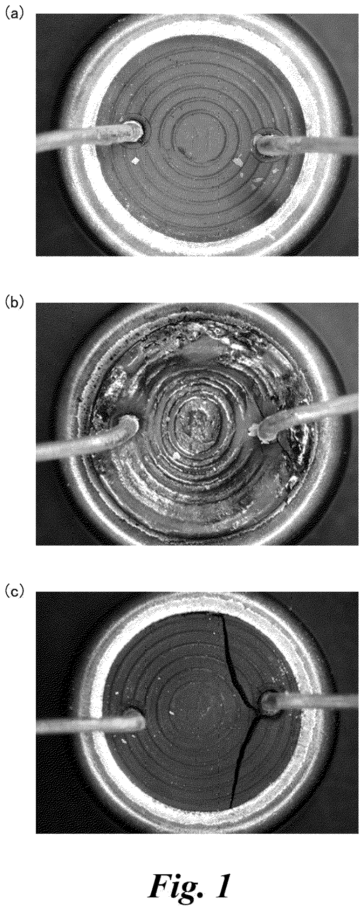

Fig. 1 is a photograph of various sealing bodies after 2500 hours under the high-temperature environment.

### EMBODIMENTS

Hereinafter, the electrolytic capacitor according to embodiments of the present disclosure will be described. Note that the present disclosure is not limited to the following embodiments.

An electrolytic capacitor is a passive element that gains capacitance and stores and discharges electric charge by the dielectric polarization of dielectric oxide film. A capacitor element of the electrolytic capacitor includes anode foil, cathode foil, a separator, and an electrolyte, and has a wound-shape or a laminated-shape. The anode foil and the cathode foil face each other via the separator. Dielectric oxide film is formed on a surface of the anode foil.

The electrolytic capacitor includes electrolytic solution and a solid electrolyte layer as the electrolyte. The solid electrolyte layer has conductive polymers, is interposed between the anode foil and the cathode foil and is in close contact with the dielectric oxide film. The electrolytic solution is solution in which anion components and cation components are added to the solvent and is filled in voids of the capacitor element.

The capacitor element is housed in a casing of the electrolytic capacitor and, the casing is sealed by a sealing body. The casing housing the capacitor element is a bottomed cylinder, and for example is made of aluminum. The sealing body is attached to an opening of the casing by a crimping process and seals the opening of the casing. Lead terminals are connected to the anode foil and the cathode foil, and external terminals are electrically connected to these connection terminals. The external terminal is lead out to the outside through a through hole of the sealing body.

The sealing body includes an elastic body mainly formed of an elastomer to improve adhesion to the casing by a crimping process and to ensure insulation. The sealing body may be a laminated body in which synthetic resin plates or metal plates are laminated on the elastic body. As the elastomer, the sealing body includes isobutylene isoprene rubber that is also referred to as butyl rubber. Furthermore, the electrolytic solution may be solution of ion-dissociable salt which dissociates into anion components and cation components, and the electrolytic solution contains glycerin, diglycerin, or both as the solvent and an antioxidant to suppress the thermal oxidative deterioration of the sealing body.

The antioxidant is water-soluble and has a benzene ring and two or more hydroxyl groups in molecules. For example, water-soluble means that 0.01 g or more of the antioxidant can dissolve in 100 ml of water at 18 °C. One or two or more of the benzene rings may be present in the molecule, and the adjacent benzene rings may share one side, such as in naphthalene. Two or more hydroxyl groups may be a substituent of one benzene ring, may be substituents distributed among two or more benzene rings, or may be present in organic groups extending from the benzene ring as a side chain.

When the sealing body contains butyl rubber and the solvent of the electrolytic solution contains glycerin, diglycerin, or both, the antioxidant expresses high oxidative deterioration suppression effect without deforming the sealing body by suppressing the permeation of the antioxidant to the sealing body. That is, it is unlikely that the sealing body deforms as if it had molt once and re-solidified. Furthermore, even when the electrolytic capacitor is exposed under the high-temperature environment of 170 °C for a long time, it becomes difficult for the electrolytic solution to transpire from the sealing body to the outside and for the sealing body to crack. Therefore, the electrolytic solution remains in the electrolytic capacitor for a long time and low ESR is maintained for a long time, so that the electrolytic capacitor with long lifetime can be achieved.

Other than being contained in the electrolytic solution, the antioxidant may be attached to the capacitor element separately from the electrolytic solution or may be added to the casing after impregnation of the electrolytic solution.

The antioxidant may be hydroquinone indicated by the below chemical formula (1). Hydroquinone has a benzene ring and two hydroxyl groups at 1-position and 4-position of the benzene ring and is water-soluble.

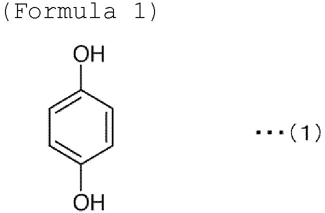

The antioxidant may be catechol indicated by the below chemical formula (2). Catechol has a benzene ring and two hydroxyl groups at 1-position and 2-position of the benzene ring and is water-soluble.

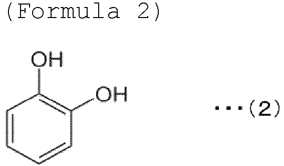

Furthermore, the antioxidant may be 2-methylhydroquione indicated by the below chemical formula (3). 2-methylhydroquinone has a benzene ring and two hydroxyl groups at 1-position and 4-position of the benzene ring and is water-soluble.

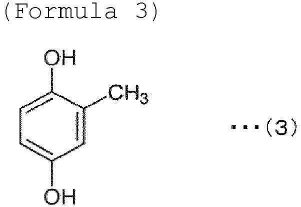

Furthermore, the antioxidant may be 2-acetylhydroquione indicated by the below chemical formula (4). 2-acetylhydroquinone has a benzene ring and two hydroxyl groups at 1-position and 4-position of the benzene ring and is water-soluble.

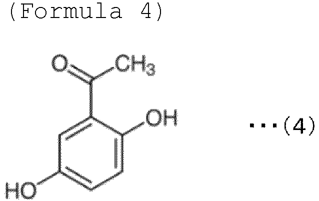

Furthermore, the antioxidant may be 4,4-thiobis(3-methyl-6-tert-butylphenol) indicated by the below chemical formula (5). 4,4-thiobis(3-methyl-6-tertbutylphenol) has a molecular structure in which two phenols are bonded at respective 4-position via a sulfur atom, has two benzene rings and two hydroxyl groups, and is water-soluble.

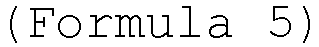

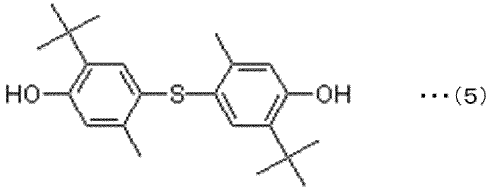

Furthermore, the antioxidant may be 1,4-dihydoxynaphthalene indicated by the below chemical formula (6). 1,4-dihydroxynaphthalene has two benzene rings sharing one side and two hydroxyl groups at 1-position and 4-position of one of the benzene rings and is water-soluble.

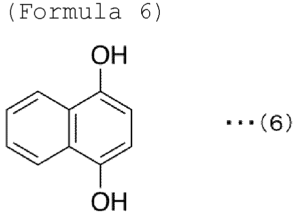

Furthermore, the antioxidant may be 2-phenylhydroquione indicated by the below chemical formula (7). 2-phenylhydroquinone has two benzene rings and two hydroxyl groups at 1-position and 4-position of one the benzene ring and is water-soluble.

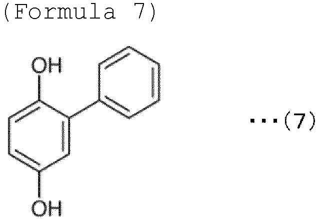

Furthermore, the antioxidant may be 1,2,4-trihydoxybenzne indicated by the below chemical formula (8). 1,2,4-trihydroxybenznene has a benzene ring and three hydroxyl groups at 1-position, 2-position, and 4-position of the benzene ring and is water-soluble.

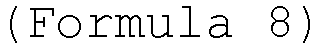

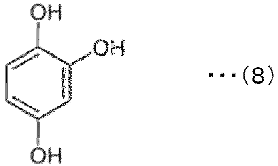

Furthermore, the antioxidant may be 1,4-dihydroxy-2-methoxybenzne indicated by the below chemical formula (9). 1,4-dihydroxy-2-methoxybenzne has a benzene ring and two hydroxyl groups at 1-position, and 4-position of the benzene ring and is water-soluble.

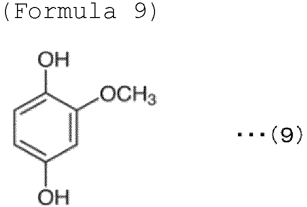

Although the solvent of the electrolytic solution contains glycerin, diglycerin, or both, if polyglycerin that is more than a dimer is contained, the sealing body will crack when exposed under the high-temperature environment for a long time. Furthermore, when glycerin, diglycerin, or both is used as the solvent of the electrolytic solution, the amount is preferably 20 wt% or more of the total solvent. Even if the amount of glycerin, diglycerin, or both account is less than 20 wt%, the suppression of the deformation of the sealing body and the transpiration of the electrolytic solution can be seen. However, when the amount of glycerin, diglycerin, or both is 20 wt% or more, by the synergistic effect between glycerin, diglycerin, or both and the antioxidant, the transpiration of the electrolytic solution is further suppressed, the cracking of the sealing body is further suppressed, and the long lifetime of the electrolytic capacitor is further achieved. Otherwise, when the amount of glycerin, diglycerin, or both is 20 wt% or more, by the synergetic effect between glycerin, diglycerin, or both and the antioxidant, the addition amount of the antioxidant can be limited, and the risk of increasing the leakage current is reduced.

However, it is preferable that the antioxidant is contained in an amount of 1.5 wt% relative to the electrolytic solution. Even if the amount of the antioxidant is less than 1.5 wt%, by increasing the concentration of glycerin and diglycerin, the transpiration of the electrolytic solution can be suppressed even when the electrolytic capacitor is exposed under the high-temperature environment for a long time, however, the viscosity of the electrolytic capacitor increases. Furthermore, it is particularly preferable that the antioxidant is contained in an amount of 3 wt% relative to the electrolytic solution. When the amount of the oxidant is 3 wt% or more, the cracking of the sealing body and the transpiration of the electrolytic solution can be suppressed when the electrolytic capacitor is exposed under the high-temperature environment for particularly long time.

Even when the concentration of glycerin and diglycerin is increased, the electrolytic capacitor may include the solid electrolyte layer. Here, the solid electrolyte layer contains conductive polymers, acts as a true cathode of the electrolytic capacitor together with the electrolytic solution, reduces the specific resistance due to high viscosity of glycerin and diglycerin, and reduces the internal resistance of the electrolytic capacitor. Moreover, although the conductivity of the solid electrolyte layer decreases and the canceling effect against the specific resistance of glycerin and diglycerin decreases when dedoping occurs in the conductive polymer, the dedoping reaction is suppressed because ion diffusivity of glycerin and diglycerin is low. Therefore, in this electrolytic capacitor, the electrolytic solution and the solid electrolyte layer are used together.

When the electrolytic solution and the solid electrolyte layer is used together, glycerin, diglycerin, or both can be contained in an amount of 40 wt% or more relative to the total amount of the solvent. When the amount glycerin, diglycerin, or both is 40 wt% or more, the transpiration of the electrolytic solution can be suppressed even when the electrolytic capacitor is exposed under the high-temperature environment for particularly long time.

The solvent of the electrolytic solution is preferably a solvent with hydrophilic groups such as hydroxyl groups or hydrophilic molecules. If other types of the solvent other than glycerin, diglycerin, or both are to be added, ethylene glycol is preferable. For example, the transpiration amount of the electrolytic solution from the sealing body can be reduced in comparison with when the solvent such as γ-butyrolactone and sulfolane that is other than ethylene glycol is added as the solvent, and the lifetime of the electrolytic capacitor is extended.

In the above electrolytic capacitor, butyl rubber contained in the sealing body is produced by vulcanization. The vulcanization may be resin vulcanization, sulfur vulcanization, and quinoid vulcanization. Vulcanizing agent may be alkyl phenol formaldehyde resin, quinoid, and sulfur, etc. Furthermore, a cross-linking accelerator may be zinc oxide, magnesium oxide, lead peroxide, dibenzothiazyl, disulfide, 1,2-polybutadiene, triallyl cyanurate methacrylic acid and acrylic acid metal salt, and N,N'-metaphenylenedimaleinoside ester stearate, etc.

Ethylene propylene rubber may be contained in the elastic body as the other elastomer, and the electrolytic solution transpiration suppression effect of the electrolytic capacitor is maintained. However, it is preferable that the weight ratio of butyl rubber (A) and ethylene propylene rubber (B) meets A/(A+B)×100≧10. In other word, the weight ratio of butyl rubber (A) and ethylene propylene rubber (B) is A:B = 10:90 or it is preferable to contain more butyl rubber than said weight ratio.

In the comparison of the blended rubber, when butyl rubber is less than 10 wt% relative to the total amount of the elastomer, in other word, when ethylene propylene rubber is more than 90 wt% relative to the total amount of the elastomer, the cracking of the sealing body is prevented, but the amount of the electrolytic solution escaping from the electrolytic capacitor to the outside is increased. In the comparison of the blended rubber, when butyl rubber is more than 90 wt% relative to the total amount of the elastomer, in other word, when ethylene propylene rubber is less than 10 wt% relative to the total amount of the elastomer, the sealing body easily cracks.

When using butyl rubber and ethylene propylene rubber together, the elastomer is preferably blended rubber in which butyl rubber and ethylene propylene rubber are cross-linked by the resin vulcanization. The transpiration of the electrolytic solution is suppressed more than when separately vulcanizing butyl rubber and ethylene propylene rubber and then mixing them. This blended rubber is produced by mixing unvulcanized butyl rubber and unvulcanized ethylene propylene rubber, then adding the resin-vulcanizing agent to the mixture, and pressurizing and heating the mixture. Otherwise, this blended rubber is produced mixing unvulcanized butyl rubber, unvulcanized ethylene propylene rubber, and the resin-vulcanizing agent, and pressurizing and heating the mixture.

The elastic body may contain carbon and inorganic filler other than butyl rubber. When carbon and inorganic filler are added, butyl rubber less likely cleaves and softening thereof is suppressed. The inorganic filler may be talc, mica, silica, kaolin, titania, alumina, and mixtures thereof, and talc and mica with flat shape are preferable. The inorganic filler with flat shape facilitates cross-linking and is suitable for adjusting a cross-linking density.

The solvent of the electrolytic solution other than ethylene glycol may be protic polar solvents such as monohydric alcohol, polyhydric alcohol, oxyalcohol compounds, and water, and aprotic polar solvents such as sulfones, amides, lactones, cyclic amides, nitriles, and sulfoxides.

The electrolytic solution is solution formed by adding anion components and cation components to the solvent Typically, the anion component and the cation component are organic acid salt, inorganic acid salt, or salt of composite compound of organic acid and inorganic acid, and are added to the solvent by ion dissociable salt which dissociates to the anion component and the cation component. Acid that is the anion component and base that is the cation component may be separately added to the solvent. Furthermore, the solvent of the electrolytic solution may not contain the anion component, the cation component, or both.

Anion components of the electrolytic solution may be organic acid, inorganic acid, or composite compounds of organic acid and inorganic acid. The organic acid may be carboxylic acid such as oxalic acid, succinic acid, glutaric acid, pimelic acid, suberic acid, sebacic acid, phthalic acid, isophthalic acid, terephthalic acid, maleic acid, adipic acid, benzoic acid, toluyl acid, enanthic acids, malonic acids, 1,6-decandicarboxylic acid, 1,7-octanedicarboxylic acid, azelaic acid, resolcinic acid, phloroglucinic acid, gallic acid, gentisic acid, protocatechuic acid, pyrocatechuic acid, trimellitic acid, and pyromellitic acid, phenols, and sulfonic acid, etc. The inorganic acid may be boric acid, phosphoric acid, phosphorus acid, hypophosphorous acid, carbonic acid, and silicic acid, etc. The composite compound of organic acid and inorganic acid may be borodisalicylic acid, borodioxalic acid, borodiglycolic acid, borodimalonic acid, borodisuccinic acid, borodiadipic acid, borodiazelaic acid, borodibenzoic acid, borodimaleic acid, borodilactic acid, borodimalic acid, boroditartric acid, borodicitric acid, borodiphthalic acid, borodi(2-hydroxy) isobutyric acid, borodiresorcinic acid, borodimethylsalicylic acid, borodinaftoeic acid, borodimandelic acid, and borodi(3-hydroxy) propionic acid, etc.

The cation component of the electrolytic solution may be cation ions produced from ammonium salt, quaternary ammonium salt, quaternarized aminidium salt, amine salt, sodium salt, and potassium salt, etc. Quaternary ammonium ions of the quaternary ammonium salt may be tetramethylammonium, triethylmethylammonium, and tetraethylammonium, etc. The quaternary amidinium salt may be ethyldimethylimidazolinium and tetramethylimidazolinium, etc. The amine salt may be primary amines, secondary amines, and tertiary amines. The primary amine may be methylamine, ethylamine, propylamine, and the like, the secondary amines may be dimethylamine, diethylamine, ethylmethylamine and dibutylamine, and the like, and the tertiary amines may be trimethylamine, triethylamine, tributylamine, ethyldimethylamine, ethyldiisopropylamine, and the like.

Furthermore, other additives may be added to the electrolytic solution. The additive may be phosphoric acid compounds such as phosphoric acid and phosphate esters, boric acid compounds such as boric acid and boric acid esters, complex compounds of boric acid and sugar alcohol such as mannitol and sorbitol, polyoxyalkylene polyol such as polyethylene glycol, polyglycerin, and polypropylene glycol, colloidal silica, and silicone oil, etc. Furthermore, the additive may include nitro compounds. The nitro compound may be o-nitrobenzoic acid, m-nitrobenzoic acid, p-nitrobenzoic acid, o-nitrophenol, m-nitrophenol, p-nitrophenol, p-nitrobenzene, p-nitrobenzyl alcohol, m-nitroacetophenone, and o-nitroanisole, etc. As other additives, it is preferable to add phosphoric acid compounds such as phosphate ester to improve chemical conversion or it is preferable to add nitro compounds such as p-nitrobenzoic acid to absorb gas.

Note that the electrolytic solution may not contain ion-dissociative salt that dissociates into anion components and cation components, and the additives, and may be formed only by glycerin, or mixture of glycerin and ethylene glycol.

The conductive polymer of the solid electrolyte layer is a self-doped conjugated polymer doped by dopant molecules in the molecules or a doped conjugated polymer doped by external dopant molecules. The conjugated polymer is obtained by chemical oxidative polymerization or electrolytic oxidative polymerization of monomers with a n-conjugated double bond or derivatives thereof. Known polymers may be used for the conjugated polymer without limitation. For example, the conjugated polymer may be polypyrrole, polythiophene, polyfuran, polyaniline, polyacetylene, polyphenylene, polyphenylenevinylene, polyacene, and polythiophenevinylene, etc. These conjugated polymers may be used in single or or in combination of two or more, and may further be a copolymer of two or more types of monomers.

Among the above-described conjugated polymers, conjugated polymers formed by polymerizing thiophene or derivatives thereof is preferable, and conjugated polymers in which 3,4-ethylenedioxythiophene (that is, 2,3-dihydrothieno[3,4-b][1,4]dioxin), 3-alkylthiophene, 3-alkoxythiophene, 3-alkyl-4-alkoxythiophene, 3,4-alkylthiophene, 3,4-alkoxythiophene, or derivatives thereof are polymerized are preferable. The thiophene derivatives may preferably be compounds selected from thiophene with substituents at 3-position and 4-position, and the 3-position and 4-position substituents of the thiophene ring may form a ring together with the 3-position and 4-position carbon. The number of carbon of alkyl and alkoxy groups is suitably from 1 to 16, and in particular, a polymer of 3,4-ethylenedioxythiophene called EDOT, that is, poly(3,4-ethylenedioxythiophene) called PEDOT is particularly preferable. Furthermore, an alkylated ethylenedioxythiophene in which an alkyl group is added to 3,4-ethylenedioxythiophene may be used, and for example, a methylated ethylenedioxythiophene (that is, 2-methyl-2,3-dihydro-thieno[3,4-b] [1,4] dioxin), ethylated ethylenedioxythiophene (that is, 2-ethyl-2,3-dihydrothieno[3,4-b] [1,4] dioxin), and the like may be used.

As a dopant, known dopants may be used without limitation. For example, the dopant may be inorganic acid such as boric acid, nitric acid, and phosphoric acid, and organic acid such as acetic acid, oxalic acid, citric acid, ascot acid, tartaric acid, squaric acid, logisonic acid, croconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimide acid, dodecylbenzenesulfonic acid, propylnaphthalenesulfonic acid, and butylnaphthalenesulfonic acid, etc. Polyanions may be polyvinyl sulfonic acid, polystyrene sulfonic acid, polyallyl sulfonic acid, polyacrylic sulfonic acid, polymethacrylic sulfonic acid, poly(2-acrylamide-2-methylpropanesulfonic acid), polyisoprene sulfonic acid, polyacrylic acid, polymethacrylic acid, and polymaleic acid, etc.

The solid electrolyte layer may contain a polar solvent with the boiling point of 150 °C or more, in addition to the conductive polymer. The polar solvent may be ethylene glycol, diethylene glycol, triethylene glycol, polyoxyethylene glycol, glycerin, diglycerin, dimethyl sulfoxide, dimethyl formamide, N-methyl-2-pyrrolidone, or combinations of two or more. The carrier mobility of the polar solvent is improved by changing a high-order structure of the conductive polymer and reorienting the crystalline structure of a polymer chain, and the electrical conductivity of the conductive polymer is improved.

Among the polar solvents, liquid compounds with the boiling point of 150 °C or more and with hydroxyl group is preferable to further improve the electrical conductivity of the conductive polymer. The liquid compound may preferably be ethylene glycol, diethylene glycol, triethylene glycol, polyoxyethylene glycol, glycerin, and polyglycerin.

Furthermore, the compound with the boiling point of 150 °C and with hydroxyl groups may be sorbitol, pentaerythritol, mannitol, xylitol, bolemitol, or a combination of two or more. These compounds improve the chemical conversion property of the dielectric oxide film and withstand voltage.

The solid electrolyte layer is formed by immersing the capacitor element in dispersion formed by dispersing the conductive polymer in the solvent, and drying the capacitor element. The anode foil, the cathode foil, and the separator may be immersed in the dispersion separately before being assembled, or the dispersion may be applied dropwise or may be applied by spraying.

Note that known anode foil, cathode foil, separator, and casing may be used without any limitation.

That is, the anode foil and the cathode foil are long foil bodies formed of valve action metal such as aluminum, tantalum, niobium, niobium oxide, titanium, hafnium, zirconium, zinc, tungsten, bismuth, and antimony, etc. A surface of the anode foil enlarged as a sintered body obtained by sintering powder of valve action metal such as aluminum or etching foil obtained by etching the stretched foil. The enlarged surface structure is formed by tunnel-shaped etching pits, spongy pits, or voids between dense powder.

Typically, the dielectric oxide film is oxide film formed on the surface layer of the anode foil, and when the anode foil is made of aluminum, it is aluminum oxide obtained by oxidizing a porous structural region. This dielectric oxide film is formed by the chemical conversion treatment in which voltage is applied in aqueous solution of adipic acid, boric acid, or phosphoric acid, etc. Furthermore, thin dielectric oxide film (about 1 to 10 V) may be formed on the surface layer of the cathode foil by chemical conversion treatment, if necessary. In addition, the cathode foil may be formed by vapor deposition of a layer consisting of metal nitrides, metal carbides, or metal carbonitrides, or may be produced by using material containing carbon on a surface thereof.

The separator includes cellulose such as kraft, Manila hemp, esparto, hemp, rayon, and mixed papers thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamide, semi-aromatic polyamide, and total aromatic polyamide, polyimide resin, polyethylene resin, polypropylene resin, trimethylpentene resin, polyphenylene sulfide resin, acrylic resin, polyvinyl alcohol resin and the like, and the resin may be used in single or in combination.

The casing sealed is formed of aluminum, aluminum alloy containing aluminum or manganese, or stainless steel, and for example is a cylinder with a bottom and an opening at the other end. The sealing body is collapsed by bending the opening of the casing inward by a crimping process and tightly contacts with an inner surface of the casing.

Hereinafter, the electrolytic capacitor of the present disclosure will be described in more detail based on the examples. Note that the present disclosure is not limited to the following examples.

### (Examples 1 to 9)

Electrolytic capacitors of the examples 1 to 9 and the comparative examples 1 to 4 were produced. These electrolytic capacitors were the same except for types of antioxidants, and were produced as follows.

That is, anode foil and cathode foil were aluminum foil, and a surface thereof was enlarged by etching, and dielectric oxide film was formed thereon by chemical conversion treatment. The oxide film on the anode side was the dielectric oxide film of the electrolytic capacitor. The same anode foil and cathode foil were used for all electrolytic capacitors, and lead wires were connected to each foil, and the anode foil and cathode foil were wound to face each other via a manila-based separator. The capacitor element was immersed in aqueous solution of ammonium dihydrogen phosphate of the same concentration for 10 minutes to perform restorative chemical conversion.

Next, dispersion of polyethylene dioxythiophene (PEDOT/PSS) doped with polystyrene sulfonic acid of the same product as the conductive polymer was prepared in the same concentration, and the capacitor element was immersed in the dispersion, pulled up, and was dried at 150 °C for 30 minutes. By this, the solid electrolyte was formed on the capacitor element.

All of the solvent forming the electrolytic solution was glycerin, and ammonium azelaate was added as the ion-dissociative salt. 0. 16 mol of ammonium azelaate was added relative to 1 kg of the solvent. The antioxidant according to each example and comparative example was added and mixed to the electrolytic solution. The addition amount of the antioxidant was 5 wt% relative to the total amount of the electrolytic solution. The capacitor element on which the solid electrolyte had been formed was immersed in this electrolytic solution to impregnate 150 mg of the electrolytic solution in the capacitor element.

Then, the capacitor element was housed in the aluminum casing with the same dimension and shape. The sealing body was mounted on the opened end of the aluminum casing, and the opened end was sealed by a crimping process at the same pressure. However, the lead wire drawn from the capacitor element was drawn from the sealing body so that the capacitor element could be conducted. The sealing body was common in all examples and comparative examples and was an elastic body formed of butyl rubber. Regular butyl was used for butyl rubber. The size of the solid electrolytic capacitor was 10 mm in diameter, 10 mm in height, and the constant rate was 35 WV and 270 µF.

The type of the antioxidants used in the examples 1 to 9 and the comparative examples 1 to 4 was as the below table 1.

**[Table 1]**

| | **Solvent** | **Antioxidant (5 wt%Added)** |
|---|---|---|
| **Example 1** | | **Hydroquinone** |
| **Example 2** | | **Catechol** |
| **Example 3** | | **2-methylhydroquinone** |
| **Example 4** | | **2-acetylhydroquinone** |
| **Example 5** | | **4,4-thiobis (3-methyl-6-tert-butylphenol)** |
| **Example 6** | | **1,4-dihydroxynaphthalene** |
| **Example 7** | **Glycerin** | **2-phenylhydroquinone** |
| **Example 8** | | **1,2,4-trihydroxybenzene** |
| **Example 9** | | **1,4-dihydroxy-2-methoxybenzene** |
| **Comparative Example 1** | | **Para-nitrophenol** |
| **Comparative Example 2** | | **Ascorbic Acid** |
| **Comparative Example 3** | | **Citric Acid** |
| **Comparative Example 4** | | **Tocopherol** |

As the above table 1, the antioxidants used in the examples 1 to 9 were the compounds indicated by the above formulae (1) to (9), and were water-soluble and had a benzene ring and two or more hydroxyl groups in the molecular structures.

Meanwhile, the antioxidant of the comparative example 1 was para-nitrophenol indicated by the below chemical formula (10) Para-nitrophenol has a benzene ring, but has only one hydroxyl group.

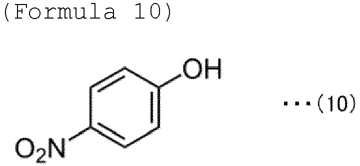

The antioxidant of the comparative example 2 was ascorbic acid indicated by the below chemical formula (11). Ascorbic acid has multiple hydroxyl groups and a five-membered ring, but does not have a benzene ring.

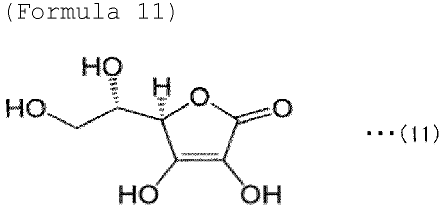

The antioxidant of the comparative example 3 was citric acid indicated by the below chemical formula (12). Citric acid has multiple hydroxyl groups, but does not have a ring structure.

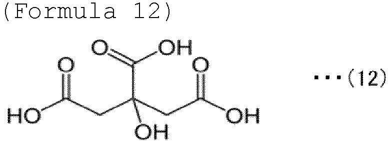

The antioxidant of the comparative example 4 was tocopherol indicated by the below chemical formula (13) Tocopherol has a benzene ring and one hydroxyl group, but has a large side chain with large carbon number and is fat-soluble, not water-soluble.

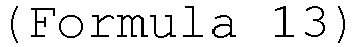

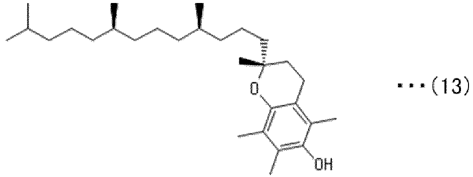

### (ESR1)

The solid electrolytic capacitors of the examples 1 were 9 and the comparative example 1 to 4 were exposed under the high-temperature environment of 170 °C. Then, the equivalent series resistance (ESR) of the electrolytic capacitor were measured at the measurement frequency of 100 kHz right before the electrolytic capacitors were exposed under the high-temperature environment and after the electrolytic capacitors had been exposed under the high-temperature environment for 2500 hours, and the condition of the sealing body was observed visually.

The measurement results and visual observation results at each time are shown in the below table 2.

**[Table 2]**

| | **Solvent** | **Antioxidant (5 wt%Added)** | **ESR** | | **Condition of Sealing Body** |
|---|---|---|---|---|---|
| | | | **Initial (Ω)** | **After 2000 Hours (Ω)** | |
| **Example 1** | | **Hydroquinone** | **0.013** | **0.026** | **No Crack** |
| **Example 2** | | **Catechol** | **0.012** | **0.027** | **No Crack** |
| **Example 3** | | **2-methylhydroquinone** | **0.012** | **0.028** | **No Crack** |
| **Example 4** | | **2-acetylhydroquinone** | **0.012** | **0.027** | **No Crack** |
| **Example 5** | | **4,4-thiobis (3-methyl-6-tert-butylphenol)** | **0.012** | **0.028** | **No Crack** |
| **Example 6** | | **1,4-dihydroxynaphthalene** | **0.012** | **0.028** | **No Crack** |
| **Example 7** | **Glycerin** | **2-phenylhydroquinone** | **0.012** | **0.028** | **No Crack** |
| **Example 8** | | **1,2,4-trihydroxybenzene** | **0.012** | **0.027** | **No Crack** |
| **Example 9** | | **1,4-dihydroxy-2-methoxybenzene** | **0.012** | **0.027** | **No Crack** |
| **Comparative Example 1** | | **Para-nitrophenol** | **0.012** | **100** 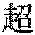 | **Cracked** |
| **Comparative Example 2** | | **Ascorbic Acid** | **0.012** | **41** | **Cracked** |
| **Comparative Example 3** | | **Citric Acid** | **0.012** | **98** | **Cracked** |
| **Comparative Example 4** | | **Tocopherol** | **0.012** | **0.027** | **Deformed** |

Furthermore, the condition of the sealing bodies of the example 1 and the comparative example 4 was photographed after the electrolytic capacitors had been exposed under the high-temperature environment of 170 °C for 2500 hours. The results are shown in Fig. 1. Fig. 1(a) is a photograph of the sealing body of the example 1, Fig. 1(b) is a photograph of the sealing body of the comparative example 4, and the Fig. 1(c) is a photograph showing the cracked sealing body for reference. Cracked means sealing is not maintained.

As shown in the table 2, after being exposed under the high-temperature environment for 2500 hours, in the electrolytic capacitor of the examples 1 to 9, the sealing body did not crack. Accordingly, the ESR was suppressed low even after the electrolytic capacitor had been exposed under the high-temperature environment for 2500 hours, indicating that the electrolytic solution remained. On the other hand, in the electrolytic capacitors of the comparative examples 1 to 3, the sealing body cracked and the ESR rapidly increased. That is, in the electrolytic capacitors of the comparative examples 1 to 3, the sealing body cracked and all electrolytic solution transpired.

The sealing body of the comparative example 4 did not crack. Furthermore, the ESR was suppressed low even after the electrolytic capacitor had been exposed under the high-temperature environment for 2500 hours, indicating that the electrolytic solution remained. However, as illustrated in Fig. 1, the sealing body of the comparative example 4 deformed as if it had molten once and re-solidified. The sealing body of the comparative example 4 might melt and drop on a mounting substrate, or the transpiration amount of the electrolytic solution might increase if the electrolytic capacitor is exposed under the high-temperature environment for further long time.

Accordingly, it was observed that when butyl rubber is used as the sealing body, glycerin, diglycerin, or both was used as the solvent, and the water-soluble antioxidant with a benzene ring and two or more hydroxyl groups was contained in the electrolytic solution, the deformation of the sealing body was suppressed, the transpiration of the electrolytic solution under the high-temperature environment was suppressed, and the long lifetime of the electrolytic capacitor was achieved.

Next, the electrolytic capacitors of the examples 10 to 15 were manufactured. The electrolytic capacitors of the examples 10 to 15 were different from the example 1 in a mixture ratio of glycerin contained in the solvent. the electrolytic capacitors of the examples 10 to 15 had a mixture of glycerin and ethylene glycol as the solvent of the electrolytic solution. The electrolytic examples 10 to 15 had different mixture ratio of glycerin in the solvent. The examples 10 to 15 had the same antioxidant as the example 1 and was produced with the same production method and same production condition as the examples 1 except for the solvent of the electrolytic solution.

Furthermore, the electrolytic capacitors of the comparative examples 5 to 7 was produced. In the electrolytic capacitor of the comparative example 5, ethylene glycol was used as the solvent of the electrolytic solution, and glycerin was not added as the solvent of the electrolytic solution. Furthermore, the electrolytic capacitor of the comparative example 5 did not include the antioxidant. In the electrolytic capacitor of the comparative example 6, the solvent of the electrolytic solution contained glycerin but did not include the antioxidant. In the electrolytic capacitors of the comparative examples 7, the solvent of the electrolytic solution contained 10 wt% of glycerin and 90 wt% of ethylene glycol. In the electrolytic capacitor of the comparative example 7, the antioxidant was hydroquinone, and the addition amount of hydroquinone in the electrolytic solution was 0.05 wt% relative to the total amount of the electrolytic solution.

The mixture ratio of the solvent of the electrolytic solution and the type of the antioxidant in such examples 10 to 15 and comparative examples 5 to 7 are indicated in the below table 3. In the below table 3, the examples 1 are also shown.

**[Table 3]**

| | **Solvent of Electrolytic Solution** | | **Amount of Antioxidant Hydroquinone (wt%)** |
|---|---|---|---|
| | **Glycerin (wt%)** | **Ethylene Glycol (wt%)** | |
| **Comparative Example 5** | **0** | **100** | **0** |
| **Comparative Example 6** | **60** | **40** | **0** |
| **Comparative Example 7** | **10** | **90** | **0.05** |
| **Example 10** | **20** | **80** | **1.5** |
| **Example 11** | **20** | **80** | **5** |
| **Example 12** | **30** | **70** | **5** |
| **Example 13** | **40** | **60** | **1.5** |
| **Example 14** | **40** | **60** | **3** |
| **Example 15** | **40** | **60** | **5** |
| **Example 1** | **100** | **0** | **5** |

### (ESR2)

The solid electrolytic capacitors of the examples 10 to 15 and the comparative examples 5 to 7 were exposed under the high-temperature environment of 170 °C. Then, the equivalent series resistance (ESR) of the electrolytic capacitor were measured at the measurement frequency of 100 kHz right before the solid electrolytic capacitors was exposed under the high-temperature environment and after the solid electrolytic capacitors had been exposed under the high-temperature environment for 2000 and 2500 hours, and the condition of the sealing body was observed visually.

The measurement results and observation results at each time are shown in the table 4.

**[Table 4]**

| | **Solvent of Electrolytic Solution** | | **Amount of Antioxidant Hydroquinone (wt%)** | **ESR** | | | **Condition of Sealing Body** |
|---|---|---|---|---|---|---|---|
| | **Glycerin (wt%)** | **Ethylene Glycol (wt%)** | | **Initial (Ω)** | **After 2000 Hours (Ω)** | **After 2500 Hours (Ω)** | |
| **Comparative Example 5** | **0** | **100** | **0** | **0.012** | **more than 100** | **-** | **Cracked** |
| **Comparative Example 6** | **60** | **40** | **0** | **0.012** | **0.025** | **more than 100** | **Cracked** |
| **Comparative Example 7** | **10** | **90** | **0.05** | **0.012** | **more than 100** | **-** | **Cracked** |
| **Example 10** | **20** | **80** | **1.5** | **0.012** | **0.025** | **0.027** | **No Crack** |
| **Example 11** | **20** | **80** | **5** | **0.012** | **0.025** | **0.027** | **No Crack** |
| **Example 12** | **30** | **70** | **5** | **0.012** | **0.025** | **0.027** | **No Crack** |
| **Example 13** | **40** | **60** | **1.5** | **0.012** | **0.025** | **0.027** | **No Crack** |
| **Example 14** | **40** | **60** | **3** | **0.013** | **0.025** | **0.027** | **No Crack** |
| **Example 15** | **40** | **60** | **5** | **0.012** | **0.025** | **0.027** | **No Crack** |
| **Example 1** | **100** | **0** | **5** | **0.013** | **0.026** | **0.028** | **No Crack** |

As shown in the comparative example 6 in the table 4, when butyl rubber was used in the sealing body and 60 wt% of the solvent was glycerin, the sealing body did not crack when the electrolytic solution had been exposed under the high-temperature environment for 2000 hours, and the electrolytic solution remained and the excellent ESR was maintained. However, in the comparative example 6, when 2500 hours had elapsed, the sealing body cracked and all electrolytic solution transpired, and the ESR indicated that the lifetime of the electrolytic capacitor had ended.

Meanwhile, as the examples 10 and 11 in the table 4 indicates, it was observed that, when the water-soluble antioxidant with a benzene ring and two or more hydroxyl groups were contained in the electrolytic solution, even if the amount of glycerin in the solvent was 20 wt%, the sealing body did not crack after 2500 hours. Therefore, the electrolytic solution remained in the electrolytic capacitor, and the ESR of the electrolytic capacitor was excellently maintained even after 2500 hours. That is, long lifetime of the electrolytic capacitor was observed.

Meanwhile, as the examples 10 and 11 in the table 4 indicates, it was observed that, when the addition amount of the antioxidant was 1.5 wt% relative to the total amount of the electrolytic solution, the sealing body did not crack after 2500 hours. Therefore, the electrolytic solution remained in the electrolytic capacitor, and the ESR of the electrolytic capacitor was excellently maintained even after 2500 hours. That is, long lifetime of the electrolytic capacitor was observed.

### (Further Heat Resistance Test)

The solid electrolytic capacitors of the examples 12 and 14 hours were exposed under the high-temperature environment of 170 °C for 3000 hours. Then, the equivalent series resistance (ESR) of the electrolytic capacitor were measured at the measurement frequency of 100 kHz after the solid electrolytic capacitors had been exposed under the high-temperature environment for 3000 hours, and the condition of the sealing body was observed visually.

The ESR measurement results and visual observation results of the electrolytic capacitor of the examples 12 and 14 after 3000 hours are shown in the below table 5.

**[Table 5]**

| | **Solvent of Electrolytic Solution** | | **Amount of Antioxidant Hydroquinone (wt%)** | **ESR** | **Condition of Sealing Body** |
|---|---|---|---|---|---|
| | **Glycerin (wt%)** | **Ethylene Glycol (wt%)** | | **After 3000 Hours (Ω)** | |
| **Example 12** | **30** | **70** | **5** | **60** | **No Crack** |
| **Example 14** | **40** | **60** | **3** | **0.034** | **No Crack** |

As shown in the table 5, in the electrolytic capacitor of the example 12, the sealing body did not crack after 3000 hours. However, in the electrolytic capacitor of the example 12, the amount of the electrolytic solution transpired from the sealing body was large, the electrolytic capacitor had dried up after 3000 hours, and the ESR indicated that the lifetime of the electrolytic capacitor had ended. In contrast, in the electrolytic capacitor of the example 14, the sealing body did not crack and the electrolytic solution remained after 3000 hours. Therefore, the ESR of the electrolytic capacitor of the example 14 was excellently maintained even after 3000 hours. That is, long lifetime of the electrolytic capacitor was observed.

In the electrolytic capacitor of the example 14, glycerin of 40 wt% or more is contained in the solvent of the electrolytic solution, and the antioxidant is contained in the amount if 3 wt% or more relative to the total amount of the electrolytic solution. By this, it was observed that, when 40 wt% or more of glycerin was contained in the solvent of the electrolytic solution, and the antioxidant is contained in the amount if 3 wt% or more relative to the total amount of the electrolytic solution, further long lifetime of the electrolytic capacitor was achieved.

## Claims

1. An electrolytic capacitor comprising:
a capacitor element comprising anode foil, cathode foil, electrolytic solution, and a solid electrolyte layer;
a casing housing the capacitor element therein;
a sealing body sealing the casing; and
an antioxidant,
wherein:
the sealing body contains butyl rubber,
the electrolytic solution contains glycerin, diglycerin, or both as a solvent, and
the antioxidant is water-soluble and has a benzene ring and two or more hydroxyl groups in a molecular structure.

2. The electrolytic capacitor according to claim 1, wherein the antioxidant is contained in the electrolytic solution.

3. The electrolytic capacitor according to claim 1 or 2, wherein the antioxidant may be hydroquinone, catechol, 2-methylhydroquinone, 2-acetylhydroquinone, 4,4'-thiobis(3-methyl-6-tert-butylphenol), 1,4-dihydroxynaphthalene, 2-phenylhydroquinone, 1,2,4-trihydroxybenzene, or 1,4-dihydroxy-2-methoxybenzene.

4. The electrolytic capacitor according to any one of claims 1 to 3, wherein the glycerin, diglycerin, or both is contained in an amount of 20 wt% relative to a total of the solvent.

5. The electrolytic capacitor according to any one of claims 1 to 4, wherein the antioxidant is contained in an amount of 1.5 wt% relative to a total of the electrolytic solution.

6. The electrolytic capacitor according to any one of claims 1 to 5, wherein:
the glycerin, diglycerin, or both is contained in an amount of 40 wt% relative to a total of the solvent, and
the antioxidant is contained in an amount of 3 wt% relative to a total of the electrolytic solution.

7. The electrolytic capacitor according to any one of claims 1 to 6, wherein the electrolytic solution further contains ethylene glycol.

8. The electrolytic capacitor according to any one of claims 1 to 7, wherein:
the sealing body further contains ethylene propylene rubber, and
the butyl rubber and the ethylene propylene rubber are cross-linked by resin vulcanization.

9. The electrolytic capacitor according to any one of claims 1 to 8, wherein the solid electrolyte layer contains a liquid compound with a boiling point of 150 °C or more and a hydroxyl group.

10. The electrolytic capacitor according to claim 9, wherein the liquid compound is ethylene glycol.
